# EUROPEAN PATENT SPECIFICATION

(11) **EP 3 309 426 B1**
(45) Date of publication and mention of the grant of the patent: **24.07.2019**
(21) Application number: 17196346.5
(22) Date of filing: 13.10.2017
(51) Int. Cl.: F16H 7/12

(54) **BELT TENSION CONTROL SYSTEM AND METHOD**
RIEMENSPANNUNGSTEUERUNGSSYSTEM UND -VERFAHREN
SYSTÈME ET PROCÉDÉ DE COMMANDE DE TENSION DE CEINTURE

(30) Priority: 14.10.2016 US 201615294587
(43) Date of publication of application: 18.04.2018
(73) Proprietor: Deere & Company, Moline, IL 61265 (US)
(72) Inventor: Gonzalez-Mohino, Pedro, 68163 Mannheim (DE)
(74) Representative: Holst, Sönke

(56) References cited:
- WO-A1-2007/033879
- DE-A1- 4 041 785
- DE-A1-102015 103 086
- US-A- 2 066 721

## Description

Endless belts are commonly used to transmit power from an engine or motor. Over time, such belts are subject to wear.

Mechanical linkages between tensioning pulleys interacting with different portions of belts have been described in the art, wherein the tensioning pulleys are coupled directly with mechanical links (DE 10 2015 103 086 A1) or by springs (US 2 066 721 A) or by a single hydraulic cylinder connecting two arms each holding one of the tensioning pulleys (DE 10 2009 028 055 A1).

DE 40 41 785 A1 describes a chain tensioning system in which a first portion of a chain is tensioned by a chain engaging member moved by a first cylinder and the second portion of the chain is tensioned by a chain engaging member coupled to the first cylinder by a spring and a second cylinder. Thus, the second cylinder defines the chain tension and the first cylinder can be used to adapt the chain timing.

The closest prior art document WO 2007/033879 A1 describes another belt tensioning mechanism with two tensioning pulleys controlled by respective cylinders connected to a control unit, which pressurizes both cylinders with an oscillating pressure to avoid oscillations in the belt.

Disclosed herein is an example belt tension control system that comprises a first fluid cylinder, a first piston slidably disposed within the first fluid cylinder and extending from a first side of the first fluid cylinder, a first belt engager connected to the first piston and to engage a first portion of a belt extending between and on a first side of first and second pulleys, a second fluid cylinder, a second piston slidably disposed within the second fluid cylinder and extending from a first side of the second fluid cylinder, a second belt engager connected to the second piston and to engage a second portion of a belt extending between and on a second side of the first and second pulleys and a fluid line connecting a second side of the first fluid cylinder to a second side of the second fluid cylinder. The second sides of the first fluid cylinder and the second fluid cylinder are connected such that the first portion of the belt and the second portion of the belt are automatically maintained at a constant tension ratio.

### Brief Description of the Drawings

- Fig. 1: is a schematic diagram of an example belt tension control system.
- Fig. 2: is a flow diagram of an example method for controlling belt tension to reduce belt wear.
- Fig. 3: is a schematic diagram of an example belt tension control system.
- Fig. 4: is a schematic diagram of an example belt tension control system.
- Fig. 5: is a schematic diagram of an example belt tension control system.

### Detailed Description of Examples

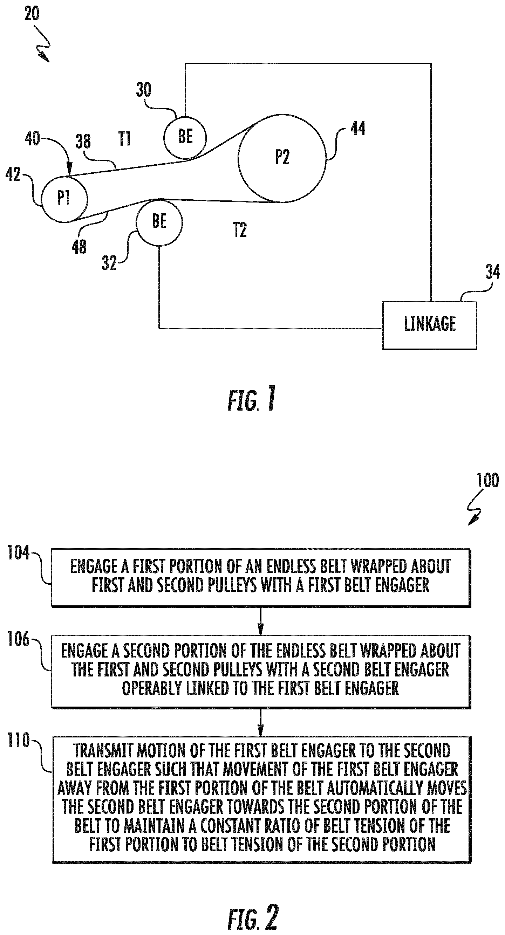

Figure 1 schematically illustrates an example belt tension control system 20. Belt tension control system 20 maintains a substantially constant ratio of tensions on opposite sides/segments of the pulley belt to reduce wear of the belt. Belt tension control system 20 comprises belt engager 30, belt engager 32 and linkage 34. Belt engager 30 comprises a member to physically contact and engage a first segment or portion 38 of an endless belt 40 wrapping about a driven pulley 42, rotatably driven in a counter clockwise direction, and a driver or drive pulley 44 driving belt 40 in a counterclockwise direction. Belt engager 30 is movable towards and away from portion 38 to facilitate adjustment of the tension of portion 38 of belt 40. In one implementation, belt engager 30 is linearly movable towards and away from portion 38. In another implementation, belt engager 30 moves in an arc or pivots about an axis towards and away from portion 38 of belt 40. In one implementation, belt engager 30 may comprise a roller or pulley. In other implementations, belt engager 30 may comprise other rotating or stationary structures that bear against portion 38 to control the tension of portion 38 of belt 40.

Belt engager 32 comprises a member to physically contact and engage a second segment or portion 48 of the endless belt 40. Belt engager 30 is movable towards and away from portion 38 to facilitate adjustment of the tension of portion 38 of belt 40. In one implementation, belt engager 30 is linearly movable towards and away from portion 38. In another implementation, belt engager 30 moves in an arc or pivots about an axis towards and away from portion 38 of belt 40. In one implementation, belt engager 32 may comprise a roller or pulley. In other implementations, belt engager 32 may comprise other rotating or stationary structures that bear against portion 48 to control the tension of portion 48 of belt 40.

Linkage 34 connects belt engager 30 two belt engager 32 such that motion of one of belt engagers 30, 32 is transferred to the other of belt engager 30, 32. As a result, movement of one of belt engager 30, 32 towards its respective portion 38, 48 automatically results in the other of belt engagers 30, 32 being moved away from or retracted from its respective portion 38, 48. Likewise, movement of one of belt engager 30, 32 away from its respective portion 38, 48 automatically results in the other of belt engager's 30, 32 being moved towards its respective portion 38, 48.

Linkage 34 is configured so as to maintain a constant ratio of the belt tension T2 of portion 48 with respect to belt tension T1 of portion 38. For purposes of this disclosure, the phrase "configured to" denotes an actual state of configuration that fundamentally ties the stated function/use to the physical characteristics of the feature proceeding the phrase "configured to". In the example illustrated, portion 48 of belt 40 is the load or working portion of belt 40, the portion of belt 40 being pulled by the drive pulley 44. Portion 38 of belt 40 is the backside of the belt 40 which is maintained at a tension T1 to main sufficient frictional contact in coupling of belt 40 against pulleys 42 and 44. In one implementation, linkage 34 maintains a constant ratio T2/T1 of at least 4 and no greater than 6. In one implementation, linkage 34 maintains a constant ratio T2/T1 of 5. By maintaining such a constant ratio T2/T1, wear of the belt is reduced.

In one implementation, linkage 34 comprises a mechanical linkage provided by one or more of a series of springs, cams, links or bars, gears, sprockets, chains and cables. For example, in one implementation, link 34 may comprise a Bowden cable having a first end operably coupled to belt engager 30 and a second end operably coupled to belt engager 32, wherein the internal cable of the Bowden cable, retained within an outer sheath, slides to transmit motion from one of belt engager 30, 32 to the other of belt engager 30, 32.

For purposes of this disclosure, the term "coupled" shall mean the joining of two members directly or indirectly to one another. Such joining may be stationary in nature or movable in nature. Such joining may be achieved with the two members or the two members and any additional intermediate members being integrally formed as a single unitary body with one another or with the two members or the two members and any additional intermediate member being attached to one another. Such joining may be permanent in nature or alternatively may be removable or releasable in nature. The term "operably coupled" shall mean that two members are directly or indirectly joined such that motion may be transmitted from one member to the other member directly or via intermediate members. The term "fluidly coupled" shall mean that two or more fluid transmitting volumes are connected directly to one another or are connected to one another by intermediate volumes or spaces such that fluid may flow from one volume into the other volume.

In yet another station, linkage 34 may comprise a fluid linkage that transmits motion or movement of one of belt engager 30, 32 to the other of belt engager 30, 32. In one implementation, such a fluid linkage 34 may comprise piston-cylinder assemblies having pistons connected to each of the belt engager 30, 32 and a fluid line connecting the piston-cylinder assemblies. For example, such a fluid linkage 34 may comprise a hydraulic or pneumatic line interconnecting a first piston-cylinder assembly having a piston connected to belt engager 30 and a second piston-cylinder assembly having a piston connected to belt engager 32. In such an implementation, the configuration of the individual cylinder-piston assemblies facilitates the provision of the maintaining of the constant tension ratio T2/T1.

Figure 2 is a flow diagram of an example method 100 for reducing belt wear by controlling belt tension. Although method 100 is described as being carried out in the context of belt tension control system 20 of Figure 1, it should be appreciated that method 100 may be carried out by any of the example belt tension control systems described hereafter or other belt tension control systems having similar characteristics.

As indicated by block 104, belt engager 30 engages a first portion 38 of an endless belt 40 is wrapped about first and second pulleys 42 and 44. As indicated by block 106, belt engager 32 engages a second portion 48 of the endless belt 40 which is also wrapped about the first and second pulleys 42 and 44. The second belt engager 32 is operably linked, by linkage 34, to the first belt engager 30. As indicated above, such operably linking may be facilitated by a mechanical linkage or a fluid linkage.

As indicated by block 110, motion or movement of belt engager 30 is automatically transmitted, in a predetermined proportional manner, to belt engager 32 by linkage 34. As a result, movement of belt engager 30 away from portion 38 of belt 40 automatically moves belt engager 32 towards portion 48 of belt 40 so as to maintain a constant ratio of the belt tension of the first portion 38 to the belt tension of the second portion 48. Likewise, movement of belt engager 30 towards portion 38 of belt 40 automatically moves belt engager 32 away from portion 48 of belt 40 so as to maintain a constant ratio of the belt tension of the first portion 38 to the belt tension of the second portion 48. In one implementation, motion is transmitted in a proportional manner such that the belt tension T2 of the second portion 48 to the belt tension T1 of the first portion 38 has a ratio of T2/T1 of at least 4 and less than or equal to 6, nominally 5. The veritable tensioning provided by method 100 maintained such a constant tension ratio T2/T1 to reduce wear of belt over time. When the belt is not running, such as during winter storage, such tension is reduced or eliminated.

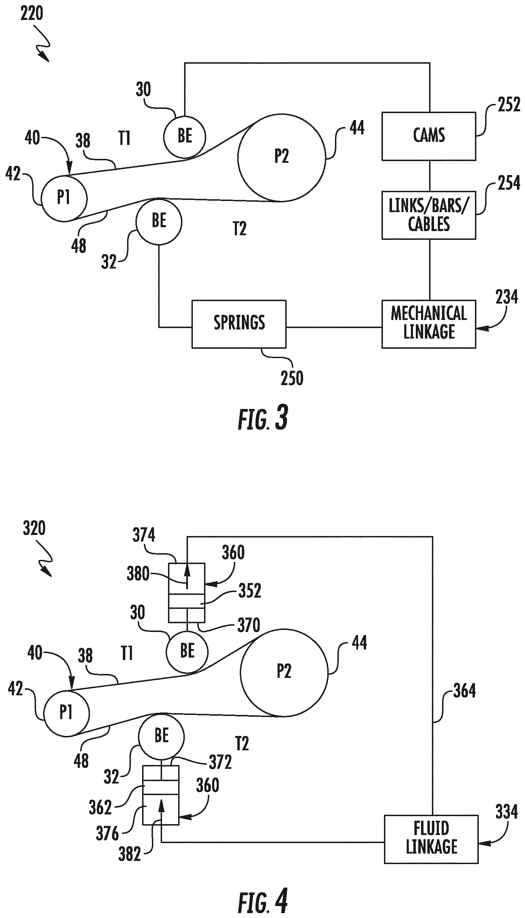

Figure 3 schematically illustrates belt tension control system 220, an example implementation of belt tension control system 20 described above. Belt tension control system 220 is similar to system 20 except that belt tension control system 220 is specifically illustrated as comprising a mechanical linkage 234 operably coupled between belt engagers 30, 32 to automatically bi-directionally transmit movement or motion, without intervening electronics, between belt engager 30, 32. Those remaining components of system 220 which correspond to components of system 20 are numbered similarly.

As schematically illustrated in Figure 3, mechanical linkage 234 may comprise an arrangement of one or more mechanical motion transmitting components such as springs 250, cams 252, and links/bars/cables 254. As should be appreciated, the arrangement of the springs 250, cams 252 and link/bar/cables 254 may vary depending upon the architecture of the surrounding environment in which linkage 234 is employed.

In one implementation, mechanical linkage 234 may comprise a Bowden cable having a first end operably coupled to belt engager 30 and a second end operably coupled to belt engager 32, wherein the internal cable of the Bowden cable, retained within an outer sheath, slides to transmit motion from one of belt engager 30, 32 to the other of belt engager 30, 32. In yet other implementations, other mechanical linkage components may be used in combination with the cable or independently of the cable to operably coupled belt engager 32 belt engager 32 so as to automatically transmit motion or movement bi-directionally between belt engager 30, 32, without any intervening sensors or electronics, to maintain a constant tension ratio T2/T1 within a predetermined range to reduce belt wear. In one implementation, motion is transmitted in a proportional manner such that the belt tension T2 of the second portion 48 to the belt tension T1 of the first portion 38 has a ratio of T2/T1 of at least 4 and less than or equal to 6, nominally 5. The veritable tensioning provided by system 220 maintains such a constant tension ratio T2/T1 to reduce wear of belt over time. When the belt is not running, such as during winter storage, such tension is reduced or eliminated.

Figure 4 schematically illustrates belt tension control system 320, an example implementation of belt tension control system 20 described above. Belt tension control system 320 is similar to system 20 except that belt tension control system 320 is specifically illustrated as comprising a fluid linkage 334 operably coupled between belt engagers 30, 32 to automatically bi-directionally transmit movement or motion, without intervening electronics, between belt engager 30, 32. Those remaining components of system 320 which correspond to components of system 20 are numbered similarly.

As schematically illustrated in Figure 3, fluid linkage 334 comprises a fluid cylinder 350, piston 352, fluid cylinder 360, piston 362 and fluid line 364. Fluid cylinder 350 contains a fluid, such as a gas or a liquid, on either side of an internally located piston 352. Piston 352 is slidable within cylinder 350 and extends from a first side 370 of cylinder 350. Piston 352 is operably coupled to belt engager 30 so as to move with or in proportion to movement of belt engager 30.

Fluid cylinder 360 contains a fluid, such as a gas or a liquid, on either side of an internally located piston 362. Piston 362 is slidable within cylinder 360 and extends from a first side 372 of cylinder 360. Piston 362 is operably coupled to belt engager 32 so as to move with or in proportion to movement of belt engager 32.

Fluid line 364 interconnects a second side 374 of cylinder 350 to a second side 376 of cylinder 360. As a result, movement of belt engager 30 in a direction away from portion 38 of belt 40 is transmitted to piston 352 to move piston 352 in the direction indicated by arrow 380. As a result, the fluid in the second side 374 of cylinder 350 is driven out of cylinder 350, across fluid line 364 and into second side 376 of cylinder 360. The inflow of fluid into second side 376 of cylinder 360 moves piston 362 in the direction indicated by arrow 382. The movement of piston 362 in the direction indicated by arrow 382 further results in belt engager 32 being driven further towards and against portion 48 of belt 40.

Likewise, movement of belt engager 32 in a direction away from portion 48 of belt 40 is transmitted to piston 362 to move piston 362 in a direction opposite to that of arrow 382. As a result, the fluid in the second side 376 of cylinder 360 is driven out of cylinder 360, across fluid line 364 and into second side 374 of cylinder 340. The inflow of fluid into second side 374 of cylinder 350 moves piston 352 in a direction opposite to that of arrow 380. The movement of piston 352 in the direction opposite to that of arrow 380 further results in belt engager 30 being driven further towards and against portion 38 of belt 40.

In one implementation, the constant tension ratio is provided by appropriately proportioning of fluid linkage 334 such that movement of belt engager 30 in a direction away from portion 38 of belt 40 by first distance X results in belt engager 32 being moved in a direction towards portion 48 of belt 40 by second distance Y times that of the first distance, wherein Y may be greater than or less than 1. In one implementation, such proportioning may be the result of the different relative sizes of the internal volumes of cylinders 350 and 360. For example, the interior volume of cylinder 360 be smaller than the interior volume of cylinder 350 such that displacement of piston 352 by distance X due to incoming or outgoing fluid results in a displacement of piston 362 by distance Y due to the same incoming or outgoing fluid.

In other implementations, the constant tension ratio may be provided by differently configuring the connection between distance 352, 362 and belt engager 30, 32. For example, even though both distance 352, 362 may move the same distance in response to incoming or outgoing fluid, belt engager 30 may be coupled to piston 352 so as to move a first distance X given movement of piston 352 by predefined distance, wherein belt engager 32 may be coupled to piston 362 so as to move a different distance Y, in response to movement of piston 362 by the same predefined distance. For example, belt engager 32 may pivot towards and away from portion 48, wherein a sufficiently long lever arm operably coupled between piston 362 and belt engager 32 provides the aforementioned distance multiplication or division.

In one implementation, motion is transmitted in a proportional manner such that the belt tension T2 of the second portion 48 to the belt tension T1 of the first portion 38 has a ratio of T2/T1 of at least 4 and less than or equal to 6, nominally 5. The veritable tensioning provided by system 320 maintains such a constant tension ratio T2/T1 to reduce wear of belt over time. When the belt is not running, such as during winter storage, such tension is reduced or eliminated.

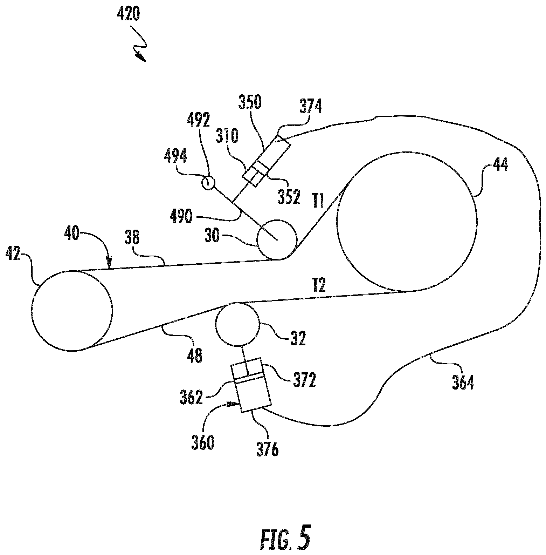

Figure 5 schematically illustrates belt tension control system 420, another example implementation of belt tension control system 20. Belt tension control system 420 is similar to belt tension control system 320 except that belt tension control system 420 is specifically illustrated as comprising swing arm 490. The remaining components of belt tension control system 420 which correspond to components of belt tension control system 320 are numbered similarly.

Swing arm 490 operably couples piston 352 to belt engager 30. Swing arm 490 has a first end coupled to belt engager 30 and a second and 492 which pivots about an axis 494. And intermediate portion of swing arms 494 is operably connected to piston 352. Movement of piston 352 swing swing arm 490 about axis 494 so as to move belt engager 30 towards or away from portion 38 of belt 40. Swing arms 490 proportions the distance by which belt engager 30 moves against portion 38 with respect to the distance by which piston 352 is moved within cylinder 350 as a result of incoming or outgoing fluid. Although not illustrated, in other implementations, belt engager 32 may likewise be movably supported by swing arm similar to swing arms 490, wherein the swing arm has an intermediate portion operably coupled to piston 362.

In one implementation, motion is transmitted in a proportional manner such that the belt tension T2 of the second portion 48 to the belt tension T1 of the first portion 38 has a ratio of T2/T1 of at least 4 and less than or equal to 6, nominally 5. The veritable tensioning provided by system 420 such a constant tension ratio T2/T1 to reduce wear of belt over time. When the belt is not running, such as during winter storage, such tension is reduced or eliminated.

## Claims

1. A belt tension control system (20) comprising:
a first fluid cylinder (350);
a first piston (352) slidably disposed within the first fluid cylinder (350) and extending from a first side of the first fluid cylinder (350);
a first belt engager (30) connected to the first piston (352) and to engage a first portion (38) of a belt (40) extending between and on a first side of first and second pulleys (42, 44);
a second fluid cylinder (360);
a second piston (362) slidably disposed within the second fluid cylinder (360) and extending from a first side of the second fluid cylinder (360); and
a second belt engager (32) connected to the second piston (362) and to engage a second portion (48) of the belt (40) extending between and on a second side of the first and second pulleys (42, 44);
**characterized by** a fluid line (364) connecting a second side of the first fluid cylinder (350) to a second side of the second fluid cylinder (360) such that the first portion (38) of the belt (40) and the second portion (48) of the belt (40) are automatically maintained at a constant tension ratio.

## Patentansprüche

1. Riemenspannungssteuerungssystem (20), umfassend:
einen ersten Fluidzylinder (350);
einen ersten Kolben (352), der in dem ersten Fluidzylinder (350) verschiebbar angeordnet ist und sich von einer ersten Seite des ersten Fluidzylinders (350) erstreckt;
eine mit dem ersten Kolben (352) verbundene erste Riemeneingriffsvorrichtung (30) zur Ineingriffnahme eines ersten Abschnitts (38) eines Riemens (40), der sich zwischen und auf einer ersten Seite einer ersten und einer zweiten Riemenscheibe (42, 44) erstreckt;
einen zweiten Fluidzylinder (360);
einen zweiten Kolben (362), der in dem zweiten Fluidzylinder (360) verschiebbar angeordnet ist und sich von einer ersten Seite des zweiten Fluidzylinders (360) erstreckt; und
eine mit dem zweiten Kolben (362) verbundene zweite Riemeneingriffsvorrichtung (32) zur Ineingriffnahme eines zweiten Abschnitts (48) des Riemens (40), der sich zwischen und auf einer zweiten Seite der ersten und der zweiten Riemenscheibe (42, 44) erstreckt;
**gekennzeichnet durch** eine Fluidleitung (364), die eine zweite Seite des ersten Fluidzylinders (350) mit einer zweiten Seite des zweiten Fluidzylinders (360) verbindet, so dass der erste Abschnitt (38) des Riemens (40) und der zweite Abschnitt (48) des Riemens (40) automatisch auf einem konstanten Spannungsverhältnis gehalten werden.

## Revendications

1. Système de contrôle de tensionnement de courroie (20), comprenant :
un premier cylindre de fluide (350) ;
un premier piston (352) disposé de manière à pouvoir coulisser à l'intérieur du premier cylindre de fluide (350) et s'étendant depuis un premier côté du premier cylindre de fluide (350) ;
un premier dispositif d'engagement de courroie (30) connecté au premier piston (352) et destiné à s'engager avec une première portion (38) d'une courroie (40) s'étendant entre et sur un premier côté des première et deuxième poulies (42, 44) ;
un deuxième cylindre de fluide (360) ;
un deuxième piston (362) disposé de manière à pouvoir coulisser à l'intérieur du deuxième cylindre de fluide (360) et s'étendant depuis un premier côté du deuxième cylindre de fluide (360) ; et
un deuxième dispositif d'engagement de courroie (32) connecté au deuxième piston (362) et destiné à s'engager avec une deuxième portion (48) de la courroie (40) s'étendant entre et sur un deuxième côté des première et deuxième poulies (42, 44) ;
**caractérisé par** une conduite de fluide (364) reliant un deuxième côté du premier cylindre de fluide (350) à un deuxième côté du deuxième cylindre de fluide (360) de telle sorte que le premier piston (38) de la courroie (40) et la deuxième portion (48) de la courroie (40) soient automatiquement maintenus à un rapport de tensionnement constant.
